# EUROPEAN PATENT SPECIFICATION

(11) **EP 1 059 036 B1**
(45) Date of publication and mention of the grant of the patent: **11.02.2004**
(21) Application number: 00202045.1
(22) Date of filing: 07.06.2000
(51) Int. Cl.: A22B 5/00

(54) **Apparatus for parallel processing of a plurality of cattle carcasses suspended from a conveyor**
Vorrichtung zur Parallelbearbeitung von mehreren Schlachttierkörpern die an einem Förderer aufgehängt sind
Appareil de traitement parallèle d'une pluralité de carcasses suspendues à un convoyeur

(30) Priority: 11.06.1999 NL 1012307
(43) Date of publication of application: 13.12.2000
(73) Proprietor: Stork MPS B.V., 7131 PG Lichtenvoorde (NL)
(72) Inventor: Post, Gerard Jan, 7559 KG Hengelo (NL)
(74) Representative: Van den Heuvel, Henricus Theodorus

(56) References cited:
- GB-A- 2 095 973
- NL-A- 9 001 591
- US-A- 3 990 126
- US-A- 4 146 945

## Description

The invention relates to an apparatus for parallel processing of a plurality of cattle carcasses suspended from a conveyor, comprising at least two similar processing stations and means for displacing the processing stations parallel to the conveyor, wherein the processing stations are displaceable along a common guide.

Higher capacity processing of carcasses generally takes place largely automatically. Carcasses suspended from a conveyor with the hind legs are transported for this purpose along a number of processing stations where the necessary operations are performed. Examples hereof are: opening the breast and abdomen, cleaving, vent-cutting, neck-cutting, leaf-fat stripping and evisceration. Because among other reasons not all operations take the same length of time and in order to have the conveyor advance at a constant speed, a choice can be made to co-displace a plurality of similar processing stations parallel to each other in the transporting direction with the conveyor.

The British patent application GB 2 095 973 thus describes a device for processing poultry provided with a guide running parallel to a conveyor and along which at least one tool is displaceable synchronously with the poultry carcasses in an active position. The tool can be moved back in a non-active position to a starting position. A device is also described with a plurality of tools displaceable along the guide, which tools are assembled on a common carriage.

The object of the present invention is to provide an apparatus for parallel processing of a plurality of cattle carcasses suspended from a slaughter line, with which a plurality of carcasses, the mutual distances between which are not fixed, can be processed simultaneously in efficient and effective manner.

The invention provides for this purpose an apparatus of the type stated in the preamble, characterized in that the processing stations comprise coupling means for releasable coupling of the processing stations and the conveyor such that the pitch between the processing stations in a position coupled to the conveyor is variable relative to the pitch in a position disconnected from the conveyor. With such an apparatus it is possible to perform the same operation on a plurality of carcasses in parallel and in accurate manner. The increased accuracy compared to the prior art of the operations to be performed lies in the individual positioning of the processing stations relative to the carcasses for processing. Despite varying mutual distances between the carcasses, the processing stations can each be placed in the desired orientation in relation to an associated carcass; the mutual distances between the processing stations are in any case determined by the manner in which the carcasses for processing are presented. The mutual distances between carcasses suspended from a conveyor are found to vary in practice because of for instance wear of the conveyor and varying intervals in the (partly manual) hooking of the carcasses to the conveyor. The use of an apparatus with a plurality of processing stations which are displaceable in a fixed mutual orientation along a guide is impossible in this situation or results in a reduced output. By means of an apparatus according to the invention it now also becomes possible to process cattle carcasses suspended from a conveyor by means of a number of processing stations placed in parallel and co-displacing with the conveyor. This was impossible heretofore since the mutual spacing between carcasses suspended from a conveyor were not constant enough for this purpose.

The Netherlands publication NL 9 001 591 describes a stretching apparatus for exerting a tensile force on the halves of a slaughtered animal in order to thus improve the meat quality. The stretching apparatus can be embodied such that it can travel along a track in the transport direction of a slaughterhouse. There is no reference to a parallel arrangement of a plurality of stretching apparatuses as according to the present invention.

The American patent US 4 146 945 describes a device for cleaving carcasses. A saw for use therein can be displaced along a frame to process the carcass during transport. The mutual spacing between a number of saws operating in parallel is not adjustable.

The American patent US 3 990 126 describes a device for removing pig's heads. Use is made herein of hooks which are displaceable at fixed mutual distances with the carcasses more or less parallel to the direction of movement of the carcasses. The mutual distance between the hooks is not adjustable.

In a preferred embodiment the processing stations are displaceable along the common guide to at least a limited extent independently of each other. The processing stations are herein preferably connected with mutually variable spacing. The means for displacing the processing stations parallel to the conveyor can herein be formed by coupling means for releasable coupling of the conveyor and the processing stations. The processing stations are even more preferably connected flexibly to each other. When a plurality of processing stations are displaceable independently of each other, they can be positioned optimally relative to successive carcasses on the conveyor irrespective of the mutual distance between the carcasses. The coupling with mutually variable spacing enables the processing stations to engage at the precise position where the carcasses are located. The coupling means for releasable coupling of the conveyor and the processing stations have the advantage that the processing stations can be displaced simultaneously by means of the drive of the conveyor. It is possible herein for the coupling means to engage on a chain of the conveyor, although engagement on another part of the conveyor, such as the drive of the conveyor, is also a possibility. The advantage of the flexible coupling of the processing stations is that the processing stations can be carried back together - in opposite direction to the transporting direction of the conveyor - to a starting position. This displacement can take place with a single drive, wherein for instance the foremost processing station can push back the subsequent stations or the rearmost processing station can pull back the preceding stations.

Using the individual coupling means the processing stations can be attached to the conveyor at the position where the carcasses for processing are located. After effecting a coupling between a processing station and the conveyor the processing station is carried along with the conveyor and the processing of the carcass can take place. In practice the engagement can advantageously take place on the carrier or spreader of a carcass.

In a preferred embodiment the processing stations are connected by means of resilient coupling means, for instance in the form of air cylinders, such that the processing stations are biased in a direction towards each other. The processing stations can herein be connected adjacently and/or a first and a last processing station of a series of mutually connected processing stations can be connected. The advantage of these constructions is that after disconnection the processing stations automatically take up a mutual position which is desired in the starting position; the processing stations are placed at a shorter pitch distance from each other.

The individual coupling means for engaging a processing station on the conveyor have a rigid construction such that in a coupled situation the position of the processing station is defined substantially unvaryingly in relation to the conveyor. The individual coupling means can thus ensure that a processing station takes up a more or less fixed position relative to a carcass for processing.

The apparatus is preferably provided with drive means for the return movement of the processing stations in the direction opposed to the direction of movement of the conveyor. The disconnected processing stations can be carried simultaneously to a starting position with a single drive, wherein it is desirable that control means be provided for controlling the displacements of the processing stations.

The present invention will be further elucidated with reference to the non-limitative embodiments shown in the following figures. Herein:
figure 1 shows a side view of an apparatus according to the invention in which the processing stations are in a non-active starting position, and
figure 2 is a side view of the apparatus shown in figure 1 in a situation in which both processing stations are in operation.

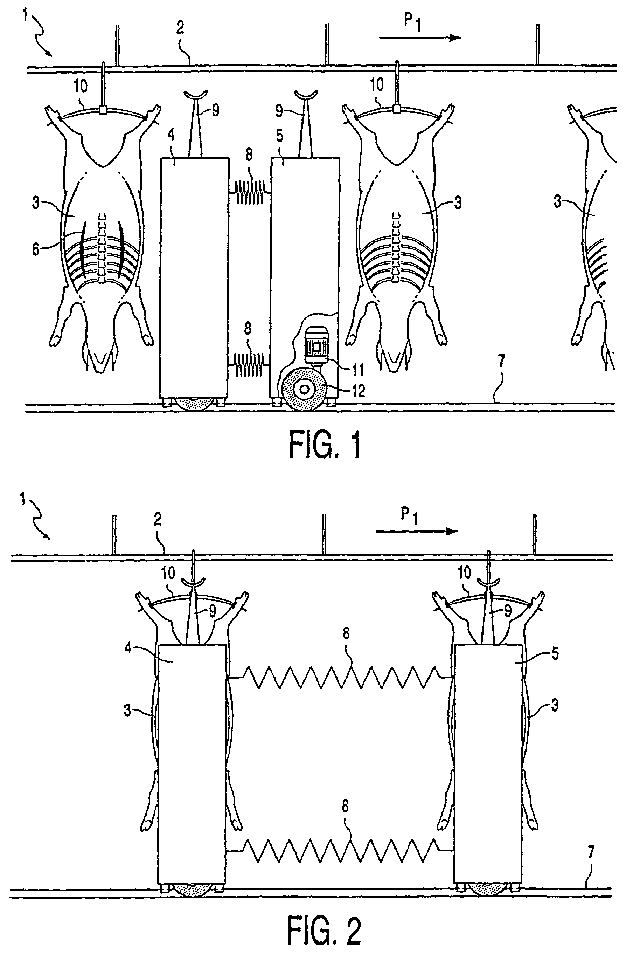

Figure 1 shows an apparatus 1 for parallel processing of cattle carcasses 3 suspended from a conveyor 2. Carcasses 3 are moved along conveyor 2 in a transporting direction P1. Arranged to the side of conveyor 2 are two processing stations 4, 5 which are only shown schematically in this figure. Processing stations 4, 5 can for instance be adapted to remove leaf fat 6 from carcasses 3.

Processing stations 4, 5 are displaceable parallel to conveyor 2 along a common guide 7. In practice the guide 7 usually consists of a guide track which is disposed above the ground and on which processing stations 4, 5 are mounted suspendedly. In the situation shown in figure 1 the stations 4, 5 are in a starting position. Using draw springs 8 the processing stations 4, 5 are connected flexibly to each other. In the starting position as shown in this figure the processing stations 4, 5 are pulled closely towards each other by the draw springs such that the pitch between stations 4, 5 is smaller than or equal to the pitch between successive carcasses 3.

Processing stations 4, 5 are also provided with individual coupling means 9 with which it is possible to engage on the suspension hooks or spreaders 10 on which the carcasses 3 hang.

One of the processing stations 4 is shown partly cut-away and shows a drive 11 for a wheel 12 with which processing stations 4, 5 can be returned to the shown position after being displaced in transporting direction P1. Only one of the processing stations 5 is provided with drive 11 and wheel 12 because the other processing station 4 is carried along on the return stroke partly through the coupling between stations 4, 5 by means of draw springs 8. There are structural advantages when the last processing station 4 placed along conveyor 2 is provided with drive 11 and wheel 12 because of the simplicity which results from using this processing station 5 as reference point.

Figure 2 shows apparatus 1 in an active position in which processing stations 4, 5 engage using coupling means 9 on respective successive spreaders 10 on which carcasses 3 are hanging. Processing stations 4, 5 are carried along in transporting direction P1 with spreaders 10 such that the desired processing can be performed on the carcass. The length of guide 7 is determined subject to the duration of the processing of the carcass. Clearly visible in this figure is that draw springs 8 are extended and that the pitch between stations 4, 5 is considerably larger than in the starting situation shown in figure 1.

After the operations are completed, stations 4, 5 are disconnected from spreader 10 and returned to the starting position by means of drive 11 and wheel 12, not shown in this figure. Apparatus 1 is relatively simple to control by means of a control unit not shown in this figure.

Although the invention is elucidated with reference to only a single embodiment, it will be apparent to all that the invention is in no way limited to the described and shown embodiment. On the contrary, many more variations are possible for a skilled person within the scope of the claims.

## Claims

1. Apparatus (1) for parallel processing of a plurality of cattle carcasses (3) suspended from a conveyor (2), comprising at least two similar processing stations (4,5) and means for displacing the processing stations (4,5) parallel to the conveyor (2), wherein the processing stations (4,5) are displaceable along a common guide (7), **characterized in that** the processing stations (4,5) comprise coupling means (9) for releasable coupling of the processing stations (4,5) and the conveyor (2) such that the pitch between the processing stations (4,5) in a position coupled to the conveyor (2) is variable relative to the pitch in a position disconnected from the conveyor (2).

2. Apparatus (1) as claimed in claim 1, wherein the processing stations (4,5) are displaceable along the common guide (7) to at least a limited extent independently of each other.

3. Apparatus (1) as claimed in claim 1 or 2, wherein the processing stations (4,5) are connected with mutually variable spacing.

4. Apparatus (1) as claimed in any of the foregoing claims, wherein the means for displacing the processing stations (4,5) parallel to the conveyor (2) are formed by the coupling means (9) for releasable coupling of the processing stations (4,5) and the conveyor (2).

5. Apparatus (1) as claimed in any of the foregoing claims, wherein the processing stations (4,5) are connectedly flexibly to each other.

6. Apparatus (1) as claimed in claim 5, wherein the processing stations (4,5) are connected by means of resilient coupling means (9) such that the processing stations (4,5) are biased in a direction towards each other.

7. Apparatus (1) as claimed in any of the foregoing claims, wherein a first and a last processing station of a series of mutually connected processing stations (4,5) are connected.

8. Apparatus (1) as claimed in any of the foregoing claims, wherein the individual coupling means (9) for engaging a processing station on the conveyor (2) have a rigid construction such that in a coupled situation the position of the processing station is defined substantially unvaryingly in relation to the conveyor (2).

9. Apparatus (1) as claimed in any of the foregoing claims, wherein the apparatus (1) is also provided with drive means for the return movement of the processing stations (4,5) in the direction opposed to the direction of movement of the conveyor (2).

10. Apparatus (1) as claimed in any of the foregoing claims, wherein the apparatus (1) is provided with control means for controlling the displacements of the processing station (4,5).

## Patentansprüche

1. Vorrichtung (1) zur Parallelbearbeitung von mehreren Schlachttierkörpern (3), die an einem Förderer (2) aufgehängt sind, bestehend aus zumindest zwei ähnlichen Verarbeitungsstationen (4,5) sowie Mitteln zum Verschieben der Verarbeitungsstationen (4,5) parallel zum Förderer (2), wobei die Verarbeitungsstationen (4,5) entlang einer gemeinsamen Führung (7) verschiebbar angeordnet sind,
**dadurch gekennzeichnet, dass** die Verarbeitungsstationen (4,5) Kupplungsmittel (9) für eine lösbare Verbindung der Verarbeitungsstationen (4,5) mit dem Förderer (2), umfassen, auf eine Weise, dass der Abstand zwischen den Verarbeitungsstationen (4,5) in einer mit dem Förderer (2) verbundenen Position relativ zum Abstand in einer von dem Förderer (2) getrennten Position veränderlich ist.

2. Apparat (1) nach Anspruch 1, wobei die Verarbeitungsstationen (4,5) entlang der gemeinsamen Führung (7) zumindest in einem begrenzten Umfang unabhängig voneinander verschiebbar sind.

3. Apparat (1) nach Anspruch 1 oder 2, wobei die Verarbeitungsstationen (4,5) mit gegenseitig veränderlichem Zwischenraum verbunden sind.

4. Apparat (1) nach irgendeinem der vorgenannten Ansprüche, wobei die Mittel zum Verschieben der Verarbeitungsstationen (4,5) parallel zum Förderer (2) von den Kupplungsmitteln (9) für eine lösbare Verbindung der Verarbeitungsstationen (4,5) mit dem Förderer (2) gebildet werden.

5. Apparat (1) nach irgendeinem der vorgenannten Ansprüche, wobei die Verarbeitungsstationen (4,5) miteinander elastisch verbunden sind.

6. Apparat (1) nach Anspruch 5, wobei die Verarbeitungsstationen (4,5) mit Hilfe von elastisch federnden Kupplungsmitteln (9) verbunden sind, auf eine Weise, dass die Verarbeitungsstationen (4,5) in einer Richtung gegeneinander vorgespannt sind.

7. Apparat (1) nach irgendeinem der vorgenannten Ansprüche, wobei eine erste und eine letzte Verarbeitungsstation, von einer Reihe gegenseitig verbundener Verarbeitungsstationen (4,5), miteinander verbunden sind.

8. Apparat (1) nach irgendeinem der vorgenannten Ansprüche, wobei die einzelnen Kupplungsmittel (9) zur Verbindung einer Verarbeitungsstation mit dem Förderer (2) eine starre Konstruktion aufweisen, so dass im gekoppelten Zustand die Position der Verarbeitungsstation in Bezug auf den Förderer (2) als im Wesentlichen unveränderlich bezeichnet werden kann.

9. Apparat (1) nach irgendeinem der vorgenannten Ansprüche, wobei der Apparat (1) zusätzlich mit Antriebsmitteln für die Rückführung der Verarbeitungsstationen (4,5) in die Richtung entgegengesetzt zur Bewegungsrichtung des Förderers (2) versehen ist.

10. Apparat (1) nach irgendeinem der vorgenannten Ansprüche, wobei der Apparat (1) mit Steuerungsmitteln für die Steuerung der Verschiebungen der Verarbeitungsstationen (4,5) versehen ist.

## Revendications

1. Appareil (1) pour traiter en parallèle une pluralité de carcasses de bétail (3) suspendues à un convoyeur (2), comprenant au moins deux postes de traitement (4, 5) similaires et des moyens pour déplacer les postes de traitement (4, 5) parallèlement au convoyeur (2), les postes de traitement (4, 5) étant déplaçables le long d'un guide commun (7), **caractérisé en ce que** les postes de traitement (4, 5) comprennent des moyens d'accouplement (9) pour accoupler de manière détachable les postes de traitement (4, 5) et le convoyeur (2) de telle sorte que l'écart entre les postes de traitement (4, 5) dans une position d'accouplement au convoyeur (2) est variable par rapport à l'écart dans une position de désaccouplement du convoyeur (2).

2. Appareil (1) selon la revendication 1, dans lequel les postes de traitement (4, 5) sont déplaçables le long du guide commun (7) au moins dans une mesure limitée indépendamment l'un de l'autre.

3. Appareil (1) selon la revendication 1 ou 2, dans lequel les postes de traitement (4, 5) sont reliés selon un espacement mutuellement variable.

4. Appareil (1) selon l'une quelconque des revendications précédentes, dans lequel les moyens pour déplacer les postes de traitement (4, 5) parallèlement au convoyeur (2) sont formés par les moyens d'accouplement (9) pour accoupler de manière détachable les postes de traitement (4, 5) et le convoyeur (2).

5. Appareil (1) selon l'une quelconque des revendications précédentes, dans lequel les postes de traitement (4, 5) sont reliés de manière flexible l'un à l'autre.

6. Appareil (1) selon la revendication 5, dans lequel les postes de traitement (4, 5) sont reliés au moyen de moyens d'accouplement (9) résilients de telle sorte que les postes de traitement (4, 5) sont orientés dans une direction l'un vers l'autre.

7. Appareil (1) selon l'une quelconque des revendications précédentes, dans lequel un premier et un dernier poste de traitement d'une série de postes de traitement (4, 5) mutuellement reliés sont reliés.

8. Appareil (1) selon l'une quelconque des revendications précédentes, dans lequel les moyens d'accouplement (9) individuels servant à accrocher un poste de traitement au convoyeur (2) ont une structure rigide de telle sorte que, dans une situation d'accouplement, la position du poste de traitement est définie de manière essentiellement invariable par rapport au convoyeur (2).

9. Appareil (1) selon l'une quelconque des revendications précédentes, dans lequel l'appareil (1) est aussi pourvu de moyens d'entraînement servant au mouvement de retour des postes de traitement (4, 5) dans la direction opposée à la direction du mouvement du convoyeur (2).

10. Appareil (1) selon l'une quelconque des revendications précédentes, dans lequel l'appareil (1) est pourvu de moyens de commande pour commander les déplacements des postes de traitement (4, 5).
